# FASCICULE DE BREVET EUROPEEN

(11) **EP 2 909 963 B1**
(45) Date de publication et mention de la délivrance du brevet: **31.07.2019**
(21) Numéro de dépôt: 13776481.7
(22) Date de dépôt: 11.10.2013
(51) Int. Cl.: H04L 9/08, H04L 9/32

(54) **PROCÉDÉ DE SIGNATURE ÉLECTRONIQUE À SIGNATURE EPHÉMÈRE**
ELEKTRONISCHE UNTERSCHRIFTSVERFAHREN MIT EPHEMERER SIGNATUR
ELECTRONIC SIGNATURE METHOD WITH EPHEMERAL SIGNATURE

(30) Priorité: 11.10.2012 FR 1259722
(43) Date de publication de la demande: 26.08.2015
(73) Titulaire: Idemia Identity & Security France, 92400 Courbevoie (FR)
(72) Inventeur: MARTINS, Alexandre, F-92130 Issy-Les-Moulineaux (FR); CHABANNE, Hervé, F-92130 Issy-Les-Moulineaux (FR); BRINGER, Julien, F-92130 Issy-Les-Moulineaux (FR); CIPIÈRE, Olivier, F-92130 Issy-Les-Moulineaux (FR); HUGEL, Rodolphe, F-92130 Issy-Les-Moulineaux (FR)
(74) Mandataire: Regimbeau
(86) Numéro de dépôt international: PCT/EP2013/071326
(87) Numéro de publication internationale: WO 2014/057107

(56) Documents cités:
- WO-A1-02/23796
- WO-A1-2010/132928
- FR-A1- 2 925 732
- US-A1- 2003 115 475

## Description

### DOMAINE DE L'INVENTION

Le domaine de l'invention est celui de la signature électronique de documents, messages ou transactions.

### ETAT DE LA TECHNIQUE

On utilise de manière courante les traits biométriques d'individus à des fins de reconnaissance ou d'identification, en procédant à une acquisition numérique des traits biométriques d'un individu pour obtenir des données biométriques numériques propres à l'individu.

On a exploité dans le document FR 2 925 732, une propriété des données biométriques d'individus, selon laquelle deux acquisitions successives du même trait biométrique d'un même individu génèrent des données différentes. Cette propriété est mise à profit pour générer des clés secrètes cryptographiques à partir de données biométriques, ces clés présentant un niveau d'entropie élevé. Une telle clé de signature peut par exemple être obtenue à partir d'une donnée biométrique hachée.

Ce type de clé de signature peut être utilisé pour signer de manière électronique un ensemble de données à transférer, par exemple un document électronique ou un message. La signature électronique permet de garantir que les données transférées n'ont pas été altérées et proviennent bien de la personne requise.

Ce type de clé ne permet cependant pas de retrouver l'identité du signataire ; il est nécessaire d'obtenir d'autres informations que la signature du message, puisque la signature seule ne permet pas de retrouver la donnée biométrique utilisée pour signer le message.

Un inconvénient de ce type d'utilisation est qu'une une clé de signature générée à partir d'une donnée biométrique d'un individu, où la donnée biométrique elle-même est stockée, en vue de son utilisation ultérieure, sur un support tel qu'une carte à puce. Un utilisateur qui souhaite signer un message doit utiliser un lecteur de carte à puce pour utiliser la clé de signature. Or, la nécessité de posséder une telle carte peut s'avérer contraignante, et ses possibilités d'utilisation peuvent être limitées.

Dans d'autres cas, une clé de signature générée à partir d'une donnée biométrique peut également être stockée sur un support de type serveur fixe, mais le même problème de limitation des possibilités d'utilisation de la clé de signature se pose.

Le document WO 2002/23796 décrit la signature d'un document comprenant une authentification biométrique, cette authentification conditionnant la génération de clés de signature à usage unique d'un haché d'un document.

Ces clés de signature n'ayant aucun lien avec l'expéditeur du message, elles permettent donc d'assurer l'intégrité du message après que son expéditeur ait été reconnu, mais non de retrouver l'individu ayant signé.

### PRESENTATION GENERALE DE L'INVENTION

Un but de l'invention est de proposer un procédé de traitement de données permettant de s'affranchir du stockage d'une donnée biométrique en vue de son utilisation ultérieure.

A cet égard, l'invention a pour objet un procédé de génération d'une clé de signature électronique et d'un certificat de clé publique associé, mis en oeuvre par une unité-client et une unité-serveur, le procédé comprenant une étape au cours de laquelle l'unité-client et/ou l'unité-serveur génère(nt) une clé de signature comprenant une clé privée et une clé publique, et un certificat de clé publique comprenant ladite clé publique, le procédé étant caractérisé en ce que l'unité-client acquiert sur un individu une donnée biométrique, en ce que la clé de signature et le certificat de clé publique sont générés à partir d'au moins une partie de ladite donnée biométrique, et en ce que la partie de la donnée biométrique à partir de laquelle la clé de signature et/ou le certificat de clé publique ont été générées est éphémère et n'est pas mémorisée après génération de la clé de signature et du certificat de clé publique.

Avantageusement, mais facultativement, l'invention comprend en outre au moins l'une des caractéristiques suivantes :
- la génération de la clé de signature et du certificat est réalisée en mettant en oeuvre un algorithme de génération de clé de signature associé à un schéma de signature parmi le groupe suivant : RSA, DSA, ECDSA.
- Au cours du procédé:
   ∘ l'unité-client transfère la donnée biométrique à l'unité-serveur,
   ∘ l'unité-serveur et/ou l'unité-client génère(nt) au moins l'une de la clé privée et la clé publique, et
   ∘ l'unité-serveur génère le certificat de clé publique et le transfère à l'unité-client.
- Au cours du procédé :
   ∘ l'unité-serveur génère la clé publique à partir de la donnée biométrique b et d'une clé privée de serveur,
   ∘ l'unité-client génère deux nombres premiers privés aléatoirement et, à partir desdits nombres premiers, forme un entier RSA public,
   ∘ l'unité-client transfère l'entier RSA à l'unité-serveur, et
   ∘ à partir de l'entier RSA et de la clé publique, l'unité-client génère une clé privée,
la clé de signature obtenue étant le couple (clé privée, clé publique) et le certificat de clé publique associé étant le couple (clé publique, entier RSA).
- l'unité-client acquiert en outre des données de géolocalisation et les transfère à l'unité-serveur avec la donnée biométrique.
- Le procédé comprend en outre, préalablement à la génération de la clé de signature et du certificat, la vérification de l'identité de l'individu par l'unité-serveur à partir d'au moins une partie de sa donnée biométrique et le cas échéant des données de géolocalisation associées.
- Le procédé est mis en oeuvre dans un système comprenant en outre une base de données comprenant une pluralité de données biométriques de référence d'individus, la vérification de l'identité de l'individu comprenant la comparaison de la donnée biométrique de l'individu à une ou plusieurs données biométriques de référence respectivement pour identifier ou authentifier l'individu.
- la donnée biométrique comprend au moins deux parties, et le procédé étant tel que:
   ∘ l'étape de génération de la clé de signature et/ou du certificat de clé publique est réalisée à partir d'une première partie de la donnée biométrique, et
   ∘ une deuxième partie de la donnée biométrique est stockée dans un support.
- la donnée biométrique est une image biométrique ou un gabarit biométrique acquis à partir d'au moins l'un des traits biométriques suivants : empreinte digitale, empreinte vocale, forme du visage, et iris.

L'invention propose également un procédé de transfert d'un message entre une unité-client et une unité de destination, comprenant la mise en oeuvre du procédé selon de génération de clé de signature électronique et de certificat associé par une unité-serveur et l'unité-client pour générer une clé de signature électronique comprenant une clé privée et une clé publique, et un certificat de clé publique associé,
le procédé comprenant en outre les étapes au cours desquelles :
- l'unité-client signe au moins un message à transférer avec la clé privée et transfère ledit message signé et le certificat à l'unité de destination,
- l'unité de destination communique la signature du message à l'unité-serveur, et
- l'unité-serveur décode ladite signature pour obtenir au moins une partie d'une donnée biométrique ayant servi à générer la signature

Avantageusement, mais facultativement, le procédé de transfert d'un message selon l'invention peut en outre comprendre au moins l'une des caractéristiques suivantes :
- la clé de signature et le certificat sont effacés après transfert d'un ou d'une pluralité de messages, ou après une période de temps prédéterminée.
- Le procédé comprend en outre une étape au cours duquel l'unité-serveur renvoie la donnée biométrique à l'unité de destination pour que celle-ci vérifie une correspondance entre le propriétaire de ladite donnée et l'individu à l'origine du message transféré.
- Le procédé comprend en outre les étapes au cours desquelles :
   ∘ l'unité de destination acquiert sur l'individu une nouvelle donnée biométrique et transfère ladite donnée à l'unité-serveur, et
   ∘ l'unité-serveur compare la nouvelle donnée biométrique avec la donnée de l'individu pour déterminer une correspondance entre le propriétaire de ladite donnée et l'individu à l'origine du message transféré.
- Au cours du procédé, une ou plusieurs unité(s)-client(s) envoie(nt) une pluralité de messages signés et de certificats correspondants à l'unité-serveur, la signature et le certificat de chaque message étant obtenus à partir de données biométriques distinctes, le procédé comprenant en outre la vérification par l'unité-serveur, à partir des certificats, que les données biométriques appartiennent au même individu.

L'invention propose enfin un système de génération de clé de signature et de certificat de clé publique associé, adapté pour la mise en oeuvre du procédé de génération de clé de signature et de certificat de clé publique associé selon l'invention, le système comprenant une unité-client et une unité-serveur adaptés pour générer à partir d'au moins une partie de donnée biométrique, une clé de signature comprenant une clé publique et une clé privée, et un certificat de clé publique,
l'unité-client étant en outre adaptée pour acquérir la donnée biométrique sur un individu, et pour signer au moins un message à partir de la clé privée et du certificat de clé publique, et
l'unité-client et l'unité-serveur étant adaptés pour mémoriser temporairement la partie de donnée biométrique jusqu'à la génération de la clé de signature et du certificat de clé publique, et pour supprimer ladite partie de donnée biométrique après ladite génération.

Avantageusement, mais facultativement, le système selon l'invention présente en outre au moins l'une des caractéristiques suivantes :
- l'unité-client est en outre adaptée pour acquérir des données de géolocalisation de l'individu, et pour transférer lesdites données à l'unité-serveur avec la donnée biométrique.
- l'unité-client est un smartphone ou une carte à puce.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- La figure 1 représente les composants d'un système de signature électronique.
- La figure 2 représente les principales étapes d'un procédé de signature électronique,
- La figure 3a représente la mise en oeuvre d'un procédé de signature électronique associé à l'algorithme de signature du type RSA
- La figure 3b représente une variante de la mise en oeuvre illustrée en figure 3a, dans laquelle les étapes de calcul sont mises en oeuvre par l'unité-serveur,
- La figure 4a représente la mise en oeuvre d'un mode de réalisation alternatif d'un procédé de signature électronique, associé à l'algorithme de signature DSA.
- La figure 4b représente la mise en oeuvre d'un mode de réalisation alternatif d'un procédé de signature électronique, associé à l'algorithme de signature ECDSA.

### DESCRIPTION DETAILLEE D'AU MOINS UN MODE DE MISE EN ŒUVRE DE L'INVENTION

### Système de génération de signature électronique

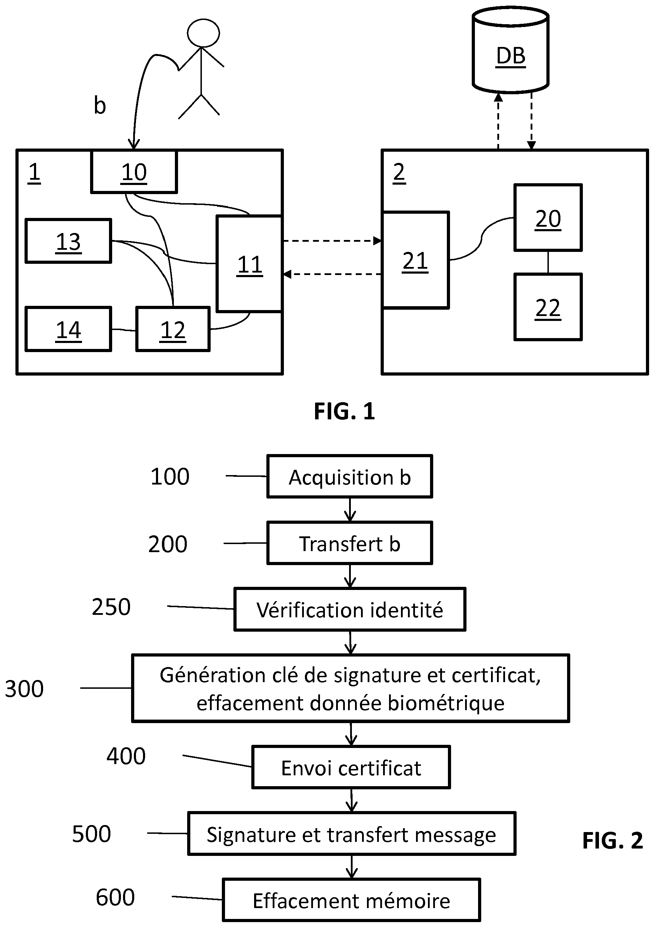

Un procédé de signature électronique de messages à transférer est mis en oeuvre conjointement par une unité-client 1 et une unité-serveur 2, ces deux unités étant représentées schématiquement en figure 1.

L'unité-client 1 comprend au minimum un capteur 10 de données biométriques et des moyens 11 de transmission de données, de préférence sans fil.

Ce capteur peut-être un appareil-photo numérique ou une caméra, ou encore un capteur d'empreintes digitales, pour acquérir respectivement une photographie du visage d'un individu, de son iris, ou une empreinte digitale.

L'unité-client 1 peut être un élément sécurisé tel qu'un téléphone sécurisé ou une carte à puce. Elle comprend une unité de calcul 12 qui peut être un processeur d'un serveur fixe ou la puce d'une carte à puce. Avantageusement, l'unité-client est un smartphone, ou « ordiphone », c'est-à-dire un téléphone mobile pourvu de fonctionnalités supplémentaires permettant la connexion et la navigation sur un réseau de type internet, et son unité de calcul 12 est intégrée dans la carte SIM du smartphone ou dans son processeur interne.

Dans le cas où l'unité-client 1 est un smartphone, le capteur 10 est avantageusement un appareil-photo numérique intégré audit smartphone, ou le microphone dudit smartphone, et l'unité-client est avantageusement complétée d'un dispositif de géo-positionnement 13, adapté pour acquérir des informations sur la géolocalisation du smartphone.

L'unité-client 1 comprend également des moyens de mémoire 14.

L'unité-serveur 2 comprend une unité de calcul 20, des moyens 21 de transmission de données, de préférence sans fil, et des moyens de mémoire 22. L'unité-serveur est de préférence un serveur fixe.

### Procédé de signature électronique

En référence à la figure 2, on a représenté les principales étapes du procédé selon l'invention.

Au cours d'une étape 100, l'unité-client 1 acquière grâce au capteur 10 une donnée biométrique b sur un individu I cherchant à signer et transférer un message. Cette donnée b peut être par exemple une empreinte digitale, une photographie du visage de l'individu, une empreinte vocale, ou la capture de l'iris de l'individu.

Cette donnée b est acquise directement sur l'individu, et ne provient pas d'une donnée préalablement enregistrée sur des moyens de mémoire de l'unité-client.

La donnée biométrique b peut être acquise en plusieurs parties distinctes de donnée b₁, b₂, ... bₙ, ou être scindée après acquisition en autant de parties.

Au cours de cette même étape, l'unité-client 1 peut également acquérir des données de géolocalisation pour identifier sa localisation, et donc celle de l'individu I, au moment de l'acquisition de la donnée biométrique. Le fait d'acquérir des données de géo-localisation en association avec la donnée biométrique permet de fournir une redondance d'informations sur l'identité de l'individu et de limiter les risques d'usurpation d'une telle identité.

L'unité-client 1 peut également acquérir une tierce donnée relative à l'identité de l'individu, comme par exemple un numéro de carte d'identité, de sécurité sociale, etc.

Au cours d'une étape 200, l'unité-client 1 transfère la donnée biométrique, ou un gabarit biométrique, c'est-à-dire une donnée contenant des informations caractéristiques de la donnée biométrique qui ont été préalablement extraites par l'unité-client 1, à l'unité-serveur 2. L'unité-client 1 transfère également, le cas échéant, les données supplémentaires acquises à l'étape précédente, c'est-à-dire les données de géolocalisation et la donnée relative à l'identité de l'individu.

Optionnellement, le procédé comporte en outre une étape 250, consistant à vérifier l'identité de l'individu.

Pour ce faire, l'unité-serveur 2 comprend ou est connectée à une base de données DB comprenant une pluralité de données d'identité de référence Id_{ref} d'individus identifiés. Ces données peuvent être des données d'identité, dans le cas où l'unité-client 1 a transféré à l'unité-serveur 2 une donne d'identité Id de l'individu. Alternativement, ces données peuvent être des données biométriques de même nature (par exemple des empreintes digitales) que la donnée biométrique acquise sur l'individu I.

Ces données peuvent encore être des couples comprenant une donnée d'identité et une donnée biométrique.

La vérification a lieu par comparaison de la donnée biométrique b et/ou de la donnée d'identité Id de l'individu aux données de référence, soit par authentification (comparaison de la donnée de l'individu à une donnée de référence de la base présumée correspondre au même individu), soit par identification (comparaison de la donnée de l'individu à une pluralité de données de référence de la base, pour détecter une correspondance entre un individu de la base et l'individu I à identifier).

Dans le cas où la donnée biométrique b est composée de plusieurs parties, par exemple deux parties b₁, b₂, une partie b₁ est avantageusement utilisée pour générer la clé de signature et le certificat de clé publique associé, tandis que l'autre partie b₂ est utilisée pour réaliser la vérification de l'identité de l'individu.

Dans ce cas, la partie b₂ est comparée à une ou plusieurs parties de données biométriques correspondantes préalablement stockée dans la base de données.

Alternativement la partie b₂ peut être stockée sur un support en vue de son utilisation ultérieure, par exemple pour compléter la partie b₁ dans le cas où cette partie b₁ ne suffit pas à identifier l'individu ayant signé le message. Dans ce cas, la partie b₂ permet de compléter la première partie b₁ pour identifier l'individu.

Le support de stockage de la partie b₂ peut être une base de données DB₂ (non représentée sur les figures) associée à l'unité-serveur, ou les moyens de mémoire de l'unité-serveur ou de l'unité-client, ou un message à signer, etc.

Au cours d'une étape 300, et le cas échéant si l'individu a été authentifié ou identifié, l'unité-client 1 et/ou l'unité-serveur 2 génèrent une clé de signature comprenant une clé privée et une clé publique, ainsi qu'un certificat de clé publique associé à cette clé publique. De préférence, au moins l'un de la clé publique associée à la clé de signature et du certificat de clé publique sont générés à partir de tout ou partie de la donnée biométrique b. Plus spécifiquement, l'unité-client 1 et/ou l'unité-serveur 2 génèrent la clé de signature comprenant la clé privée et la clé publique, et l'unité-serveur 2 génère un certificat de clé publique comprenant ladite clé publique. Le certificat de clé publique permet, en étant joint à un message signé par une unité, de garantir l'authenticité de la clé utilisée : une fois la validité du certificat vérifiée, la clé publique qu'il contient permet de vérifier la validité de la signature du message transféré.

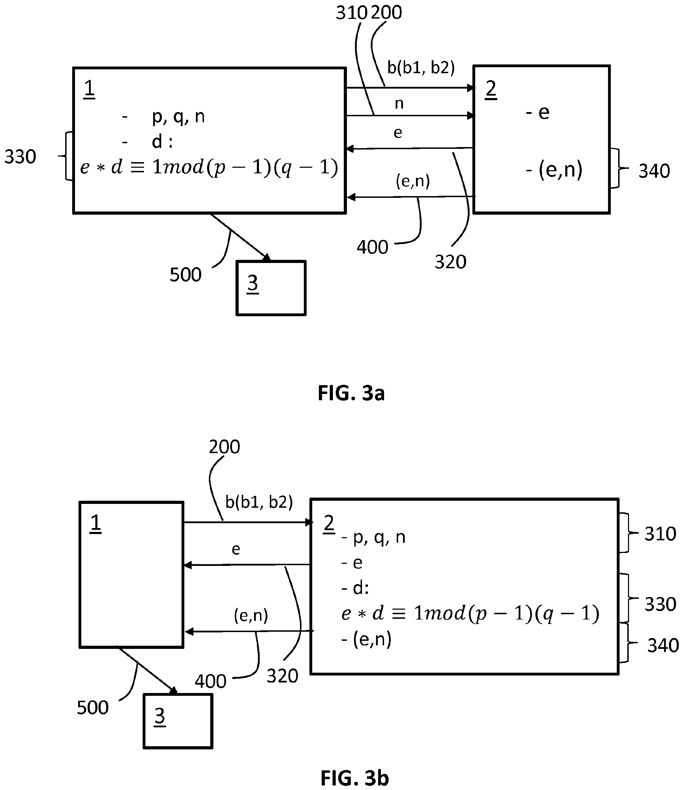

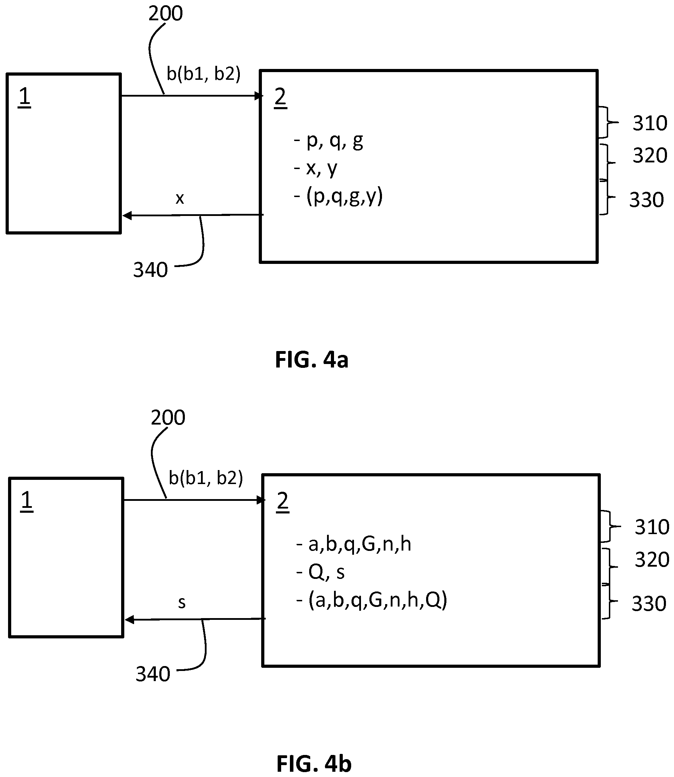

Différents exemples de mise en oeuvre de cette étape 300 sont décrits ci-dessous en référence aux figures 3 et 4.

Pour permettre la mise en oeuvre de cette étape 300 de génération de la clé de signature et du certificat de clé publique associé, la donnée biométrique b acquise sur l'individu I à la première étape 100 du procédé est mémorisée temporairement par les moyens de mémoire respectifs 11, 22, de l'unité-client 1 et de l'unité-serveur 2, le temps pour celles-ci de générer la clé de signature et/ou le certificat de clé publique.

Cependant, à l'issue de l'étape 300, la donnée biométrique b est effacée de la ou des mémoires 11, 12 de l'unité-client 1 et de l'unité-serveur 2. Ainsi la donnée b est éphémère : elle ne sert qu'à la génération d'une clé de signature et du certificat de clé publique associé, et n'est pas conservée après cette opération.

Suite à l'étape 300 de génération d'une clé de signature et d'un certificat de clé publique, l'unité-serveur 2 envoie au cours d'une étape 400 à l'unité-client 1 le certificat de clé publique.

De plus, si l'unité-serveur 2 a généré la clé privée, celle-ci est envoyée au cours de cette étape, via un canal sécurisé, à l'unité-client 1. En revanche si l'unité-client 1 a généré ladite clé privée, celle-ci reste en la possession de l'unité-client.

Au terme de cette étape, l'unité-client 2 dispose donc de la clé privée et du certificat de clé publique qui contient la clé publique.

Elle peut donc, au cours d'une étape 500, signer un message en utilisant sa clé privée, et transférer ce message à un destinataire en y joignant le certificat de clé publique.

La clé de signature ainsi que le certificat de clé publique associé peuvent également être éphémères, c'est-à-dire ne pas être conservés après avoir servi à signer un, ou éventuellement un nombre déterminé de messages, ou encore ils peuvent être effacés après un laps de temps prédéterminé. Le procédé peut donc comprendre une étape 600 d'effacement de la clé de signature et du certificat des mémoires des unité-client et unité-serveur.

Dans le cas d'un effacement de la clé de signature et du certificat, les éléments ayant pu servir à les générer sont également supprimés à l'issue de l'étape 300.

Avantageusement, la donnée biométrique b, la clé de signature et le certificat correspondant sont utilisés pour ne signer qu'un seul message, et sont renouvelés à chaque nouveau message à transférer. Ainsi, non seulement la signature et le certificat utilisés présentent un niveau de confidentialité élevé du fait qu'ils sont dérivés d'une donnée biométrique, mais en plus le fait qu'ils soient renouvelés à chaque nouveau message à transférer permet de ne pas les stocker et d'éviter tout risque d'usurpation.

Dans le cas où la clé de signature et le certificat sont générés à partir d'une partie b1 seulement d'une donnée biométrique, la signature présente un niveau de confidentialité plus important car il n'est pas possible de retrouver la donnée b d'origine à partir seulement d'une partie de celle-ci.

### Génération d'une clé de signature et d'un certificat de clé publique associé

En référence aux figures 3 et 4, on va maintenant décrire des modes de réalisation de l'étape 300 de génération d'une clé de signature et d'un certificat de clé publique à partir de la donnée biométrique, après que l'unité-client a acquis et transféré à l'unité-serveur une donnée biométrique et le cas échéant des données d'identification et des données de géolocalisation.

Cette étape est avantageusement réalisée selon des techniques de cryptographie connues telles que notamment RSA, DSA, ou ECDSA. Elle peut être mise en oeuvre par l'unité-serveur seule, ou conjointement par l'unité-serveur et l'unité-client si cette dernière dispose de moyens de calcul. Dans la suite, les étapes de calcul mises en oeuvre par l'une ou l'autre de l'unité-client et de l'unité-serveur sont réalisées par leur unité de calcul 12, 20 respective. Par exemple, dans le cas où l'unité-client est une carte à puce, les étapes de calcul sont mises en oeuvre par la carte à puce. Si l'unité-client est un smartphone, les étapes de calcul peuvent être mises en oeuvre par la carte SIM du smartphone, ou par le processeur de celui-ci.

Comme décrit ci-avant, dans le premier cas, l'unité-serveur génère la clé privée, la clé publique, et le certificat, puis envoie la clé privée à l'unité-client via un canal sécurisé, et dans le second cas, c'est l'unité-client qui génère sa clé privée.

Sur la figure 3a, on a représenté un mode de mise en oeuvre utilisant la technique RSA, et dans lequel l'unité-client et l'unité-serveur contribuent conjointement à la génération des clés privées, publiques et du certificat. Les procédés DSA et ECDSA sont aussi applicables.

Au cours d'une étape 310, l'unité-client génère deux nombres premiers p et q aléatoirement pour former un entier dit RSA n=pq. n est public, il est envoyé par l'unité-client à l'unité-serveur.

Au cours d'une étape 320, l'unité-serveur génère une clé publique e à partir de la donnée biométrique b, et le cas échéant d'autres éléments comprenant par exemple une donnée d'identité Id de l'individu, ses coordonnées de géopositionnement, un marqueur temporel (« timestamp » en anglais), un compteur, ou une donnée générée aléatoirement, une clé publique e=E_{K}(b), où Ek est un algorithme de chiffrement symétrique, dont l'inversion est considérée comme « difficile » (inversion irréalisable sans la connaissance de la clé K avec des moyens de calcul actuels). Pour ce faire l'unité-serveur dispose d'une clé privée K de serveur, L'unité-serveur envoie la clé publique e à l'unité-client.

Au cours d'une étape 330, l'unité-client calcule sa clé privée d telle que *d* ^{∗} *e* ≡ 1 *mod*(*p* - *1*)(*q* - 1). La clé de signature obtenue est le couple (clé privée, clé publique) tel que la clé privée est d et la clé publique est e. Si un tel d n'existe pas, les données ayant servi à l'obtention de clé publique e sont adaptées ou modifiées en vue de réitérer cette étape et d'obtenir la clé privée d. Cette itération peut être mise en oeuvre à la fin de l'étape 320 de génération de la clé publique e ou à la fin de l'étape 330. Dans ce cas, l'unité-client ayant détecté l'impossibilité d'obtenir une clé privée d, envoie un message d'erreur à l'unité-serveur.

L'unité-client génère ensuite, au cours d'une étape 340, un certificat contenant le couple (e, n), qui est transféré au cours de l'étape 400 à l'unité-serveur. Puis l'unité serveur signe le certificat à partir d'une clé de signature du serveur dite de certification et renvoie le certificat ainsi certifié/validé à l'unité-client.

Comme indiqué précédemment, à l'issue de l'étape 300 de génération de la clé de signature et du certificat de clé publique associé, une étape 350 d'effacement de la donnée biométrique b, ainsi que des données ayant servi à générer la clé de signature et le certificat est mise en oeuvre. En l'espèce, l'unité-client et/ou l'unité-serveur effacent les données additionnelles ayant servi à générer la clé publique e.

Au cours de l'étape 500, l'unité client signe le message à partir du couple (d,n) et envoie le message signé avec le certificat (e,n) à une unité de destination 3. Cette signature peut être vérifiée par l'unité de destination 3 grâce à la clé publique e contenue dans le certificat sans obtenir d'information sur la donnée biométrique b utilisée.

Lorsque ce message signé ou la signature est simultanément ou ultérieurement envoyé à l'unité-serveur (par l'unité-client ou par le destinataire), la signature peut-être décodée par l'unité-serveur pour obtenir la donnée biométrique b, à partir de la clé publique e et de la clé de chiffrement privée K correspondante.

Lorsque la donnée biométrique b comprend deux parties b₁ et b₂, dont la partie b₁ a servi à générer la clé de signature et le certificat de clé publique associé, la partie b₂ a été stockée sur un support additionnel, soit dans une base de données DB₂, soit dans le message, etc. Le cas échéant, la partie b₂ peut avoir été chiffrée par l'unité-serveur à l'aide d'une clé secrète dédiée.

L'unité-serveur décode alors la signature pour obtenir la partie b₁, et récupère la partie b₂ pour obtenir la donnée biométrique b complète, et peut exploiter cette donnée pour faire le lien entre la signature et l'individu.

Pour ce faire, la donnée b permet d'identifier l'individu de la même manière qu'au cours de l'étape 250 de vérification de son identité, par comparaison à une base de données centrale DB.

Alternativement, pour faire le lien entre la signature et l'individu, le destinataire du message peut envoyer simultanément la signature et une nouvelle capture b' biométrique acquise sur l'individu à l'origine du message à l'unité-serveur. Cette dernière peut décoder la signature pour obtenir la donnée biométrique b, et comparer la donnée b à la donnée b' pour détecter une correspondance.

Selon une autre alternative, le destinataire du message peut envoyer la signature à l'unité-serveur, qui la décode pour obtenir la donnée biométrique b. L'unité-serveur peut ensuite renvoyer la donnée b au destinataire initial du message, ce dernier pouvant ensuite déterminer si cette donnée b correspond à l'individu ayant signé le message. Par exemple, si la donnée b est une photographie de visage, le destinataire peut comparer la photo reçue à une autre photo stockée sur un support ou au visage d'une personne ayant à l'origine du message signé.

Ces modes de mise en oeuvre permettent de ne pas recourir à une base de données centrale DB.

Si l'unité-serveur reçoit une pluralité de signatures avec, dans chaque signature, un certificat (eᵢ, nᵢ), l'unité-serveur peut déchiffrer chacune des clés publiques eᵢ à partir de la fonction de chiffrement correspondant E_{Ki} pour obtenir une donnée biométrique bᵢ. La comparaison des différentes données biométriques bᵢ permet de déterminer si les certificats proviennent du même individu.

Ce mode de mise en oeuvre est particulièrement sécurisé du fait que l'unité-serveur n'a pas accès aux données privées p et q détenues par l'unité-client.

Selon un mode de mise en oeuvre alternatif représenté en figure 3b, l'étape de génération de la clé de signature 300 est mise en oeuvre uniquement sur l'unité-serveur.

Ainsi, au cours de l'étape 310, c'est l'unité-serveur qui génère les deux nombres premiers p et q aléatoirement pour former l'entier RSA public n=pq. L'unité-serveur transfère cet entier à l'unité-client via un canal non sécurisé (puisque n est public).

L'étape 320 est analogue à précédemment, et l'étape 330 de génération de la clé privée d est mise en oeuvre par l'unité-serveur, qui transfère ensuite cette clé privée à l'unité-client via un canal sécurisé. L'étape 340 de génération du certificat de clé publique associé à la clé de signature est mise en oeuvre par l'unité-serveur, qui transfère ledit certificat à l'unité-client.

Ainsi, toutes les étapes de calcul sont mises en oeuvre par l'unité-serveur.

On a représenté en figure 4a un mode de réalisation alternatif de l'étape 300 de génération des clés de signature, dans lequel l'étape 300 est réalisée uniquement par l'unité-serveur, au moyen du procédé DSA.

Au cours de cette étape, l'unité-serveur génère au cours d'une étape 310 des paramètres p, q qui sont des nombres premiers, tels que p-1 = qz avec z entier, et g et h tels que 1<h<p-1 et g=h^{Z} mod p soit supérieur à 1. g est un élément d'ordre q modulo p calculé à partir d'un chiffrement de la donnée biométrique b (et des éventuelles données additionnelles comme indiqué ci-avant), et où l'algorithme de chiffrement est choisi de manière à obtenir des éléments du groupe des entiers modulo p dans le cas de DSA.

Au cours d'une étape 320, l'unité-serveur génère aléatoirement une clé privée x pour l'unité-client, telle que 0<x<q, et il calcule une clé publique y telle que y=g^{x} mod p.

Au cours d'une étape 330, l'unité-serveur crée un certificat comportant les paramètres p, q, et g et la partie publique y de la clé.

Au cours d'une étape 340, l'unité-serveur envoie à l'unité-client sur un canal sécurisé la clé privée x. Alternativement, la clé privée x et la clé publique y sont générées par l'unité-client.

Les étapes suivantes du procédé sont les mêmes que précédemment.

La figure 4b illustre une variante employant la méthode ECDSA. Selon cette variante, l'unité-serveur génère au cours d'une étape 310 un ensemble de paramètres a, b, q, G, n, et h, tels que :
- Les éléments a et b a et b sont deux éléments d'un corps fini de cardinal q, définissant une courbe elliptique y²=x³+ax+b.
- G est un élément de la courbe elliptique d'ordre n avec n premier, calculé à partir d'un chiffrement de la donnée biométrique b, où l'algorithme de chiffrement est choisi de manière à obtenir des points de la courbe elliptique,
- h est le cofacteur de la courbe.

Au cours d'une étape 320, l'unité-serveur choisit un entier s entre 1 et n-1 et calcule Q=sG à partir de la courbe elliptique. Q est la clé publique, et s est la clé privée.

Au cours de l'étape 330, l'unité-serveur crée un certificat comportant les paramètres q, a, b, G, n, et h, ainsi que la clé publique Q, et envoie au cours d'une étape 340 à l'unité-client la clé privée s.

Les étapes suivantes du procédé sont les mêmes que précédemment.

Le fait de pouvoir mettre en oeuvre l'étape de génération de la clé de signature uniquement sur l'unité-serveur permet d'utiliser une unité-client dont les moyens de calculs sont limités.

Enfin, la signature utilisée ne donne pas accès à la donnée biométrique utilisée et permet de conserver la confidentialité de l'identité du signataire du message.

Le procédé proposé présente également l'avantage de pouvoir être mis en oeuvre entièrement en suivant les normes usuelles dans le domaine des infrastructures à clé publique (connues en anglais sous l'acronyme PKI pour Public-Key Infrastructure).

## Revendications

1. Procédé de génération d'une clé de signature électronique et d'un certificat de clé publique associé, mis en oeuvre par une unité-client (1) et une unité-serveur (2), le procédé comprenant une étape au cours de laquelle l'unité-client et/ou l'unité-serveur génère(nt) une clé de signature comprenant une clé privée et une clé publique, et un certificat de clé publique comprenant ladite clé publique,
le procédé étant **caractérisé en ce que** l'unité-client (1) acquiert sur un individu une donnée biométrique (b), **en ce que** la clé publique et le certificat de clé publique sont générés par chiffrement d'au moins une partie de ladite donnée biométrique (b, b₁) à l'aide d'une clé de chiffrement privée (K) connue de l'unité-serveur (2) de manière à pouvoir être décodés par l'unité-serveur (2) pour obtenir ladite partie de donnée biométrique,
et **en ce que** la partie de la donnée biométrique (b, b₁) à partir de laquelle la clé publique et le certificat de clé publique ont été générés est éphémère et n'est pas mémorisée après génération de la clé de signature et du certificat de clé publique.

2. Procédé selon la revendication 1, dans lequel la génération de la clé de signature et du certificat est réalisée en mettant en oeuvre un algorithme de génération de clé de signature associé à un schéma de signature parmi le groupe suivant : RSA, DSA, ECDSA.

3. Procédé selon l'une des revendications précédentes, dans lequel :
- l'unité-client (1) transfère la donnée biométrique (b) à l'unité-serveur (2),
- l'unité-serveur et/ou l'unité-client génère(nt) au moins l'une de la clé privée et la clé publique, et
- l'unité-serveur génère le certificat de clé publique et le transfère à l'unité-client.

4. Procédé selon la revendication 3, dans lequel :
- l'unité-serveur génère la clé publique (e) à partir de la donnée biométrique b et d'une clé privée (K) de serveur,
- l'unité-client génère deux nombres premiers privés (p, q) aléatoirement et, à partir desdits nombres premiers, forme un entier RSA public (n),
- l'unité-client transfère l'entier RSA (n) à l'unité-serveur, et
- à partir de l'entier RSA (n) et de la clé publique (e), l'unité-client génère une clé privée (d),
la clé de signature obtenue étant le couple (clé privée, clé publique) (d,e) et le certificat de clé publique associé étant le couple (clé publique, entier RSA) (e, n).

5. Procédé selon l'une des revendications précédentes, dans lequel l'unité-client acquiert en outre des données de géolocalisation et les transfère à l'unité-serveur avec la donnée biométrique.

6. Procédé selon l'une des revendications précédentes, comprenant en outre, préalablement à la génération de la clé de signature et du certificat, la vérification de l'identité de l'individu par l'unité-serveur à partir d'au moins une partie de sa donnée biométrique (b, b₂) et le cas échéant des données de géolocalisation associées.

7. Procédé selon la revendication 6, mis en oeuvre dans un système comprenant en outre une base de données (DB) comprenant une pluralité de données biométriques de référence d'individus (bref), la vérification de l'identité de l'individu comprenant la comparaison de la donnée biométrique de l'individu à une ou plusieurs données biométriques de référence respectivement pour identifier ou authentifier l'individu.

8. Procédé selon l'une des revendications précédentes, dans lequel la donnée biométrique (b) comprend au moins deux parties (b₁, b₂), et dans lequel :
- l'étape de génération de la clé de signature et/ou du certificat de clé publique est réalisée à partir d'une première partie (bi) de la donnée biométrique (b), et
- une deuxième partie (b₂) de la donnée biométrique (b) est stockée dans un support.

9. Procédé de transfert d'un message entre une unité-client et une unité de destination (3), comprenant la mise en oeuvre du procédé selon l'une des revendications précédentes par une unité-serveur (2) et l'unité-client (1) pour générer une clé de signature électronique comprenant une clé privée et une clé publique, et un certificat de clé publique associé,
le procédé comprenant en outre les étapes au cours desquelles :
- l'unité-client (1) signe au moins un message à transférer avec la clé privée et transfère ledit message signé et le certificat à l'unité de destination (3),
- l'unité de destination (3) communique la signature du message à l'unité-serveur, et
- l'unité-serveur (2) décode la clé publique ou le certificat de clé publique pour obtenir au moins une partie d'une donnée biométrique (b) ayant servi à générer la signature.

10. Procédé de transfert d'un message selon la revendication précédente, dans lequel la clé de signature et le certificat sont effacés après transfert d'un ou d'une pluralité de messages, ou après une période de temps prédéterminée.

11. Procédé de transfert d'un message selon la revendication 9 ou 10, comprenant en outre une étape au cours duquel l'unité-serveur (2) renvoie la donnée biométrique (b) à l'unité de destination (3) pour que celle-ci vérifie une correspondance entre le propriétaire de ladite donnée (b) et l'individu à l'origine du message transféré.

12. Procédé de transfert d'un message selon la revendication 10, comprenant en outre les étapes au cours desquelles :
- l'unité de destination (3) acquiert sur l'individu une nouvelle donnée biométrique (b') et transfère ladite donnée à l'unité-serveur (2), et
- l'unité-serveur (2) compare la nouvelle donnée biométrique (b') avec la donnée (b) de l'individu pour déterminer une correspondance entre le propriétaire de ladite donnée et l'individu à l'origine du message transféré.

13. Procédé de transfert d'un message selon l'une des revendications 10 à 12, dans lequel une ou plusieurs unité(s)-client(s) envoie(nt) une pluralité de messages signés et de certificats correspondants à l'unité-serveur, la signature et le certificat de chaque message étant obtenus à partir de données biométriques distinctes, le procédé comprenant en outre la vérification par l'unité-serveur, à partir des certificats, que les données biométriques appartiennent au même individu.

14. Système de génération de clé de signature et de certificat de clé publique associé, adapté pour la mise en oeuvre du procédé selon l'une des revendications 1 à 10, le système comprenant une unité-client (1) et une unité-serveur (2) adaptés pour générer une clé de signature comprenant une clé publique et une clé privée, et/ou un certificat de clé publique, par chiffrement d'au moins une partie de donnée biométrique (b, b₁) à l'aide d'une clé de chiffrement privée (K) connue de l'unité-serveur (2),
l'unité-client (1) étant en outre adaptée pour acquérir la donnée biométrique sur un individu, et pour signer au moins un message à partir de la clé privée et du certificat de clé publique, et l'unité-serveur (2) étant adaptée pour décoder la clé publique et/ou le certificat de clé publique et obtenir ladite partie de donnée biométrique,
l'unité-client (1) et l'unité-serveur (2) étant adaptés pour mémoriser temporairement la partie de donnée biométrique (b, b₁) jusqu'à la génération de la clé de signature et du certificat de clé publique, et pour supprimer ladite partie de donnée biométrique après ladite génération.

15. Système selon la revendication 14, dans lequel l'unité-client (1) est un smartphone ou une carte à puce.

## Patentansprüche

1. Verfahren zum Generieren eines elektronischen Signaturschlüssels und eines zugeordneten öffentlichen Schlüsselzertifikats, durchgeführt von einer Client-Einheit (1) und einer Server-Einheit (2), wobei das Verfahren einen Schritt umfasst, bei dem die Client-Einheit und/oder die Server-Einheit einen Signaturschlüssel generiert/generieren, umfassend einen privaten Schlüssel und einen öffentlichen Schlüssel, und ein öffentliches Schlüsselzertifikat, umfassend den öffentlichen Schlüssel,
wobei das Verfahren **dadurch gekennzeichnet ist, dass** die Client-Einheit (1) auf einem Individuum eine biometrische Angabe (b) gewinnt, dass der öffentlichen Schlüssel und/oder das öffentliche Schlüsselzertifikat durch Verschlüsseln von mindestens einem Teil der biometrischen Angabe (b, b₁) mit Hilfe eines der Server-Einheit (2) bekannten privaten Chiffrierschlüssels (K) derart generiert werden, dass sie von der Server-Einheit (2) entschlüsselbar sind, um den Teil der biometrischen Angabe zu erhalten,
und dass der Teil der biometrischen Angabe (b, b1), aus welcher der öffentliche Schlüssel und das öffentliche Schlüsselzertifikat generiert wurden, ephemer ist und nach dem Generieren des Signaturschlüssels und des öffentlichen Schlüsselzertifikats nicht gespeichert wird.

2. Verfahren nach Anspruch 1, wobei das Generieren des Signaturschlüssels und des Zertifikats durch Anwendung eines Algorithmus zum Generieren von Signaturschlüsseln durchgeführt wird, der einem Signaturschema der folgenden Gruppe RSA, DSA, ECDSA zugeordnet ist.

3. Verfahren nach einem der vorstehenden Ansprüche, wobei:
- die Client-Einheit (1) die biometrische Angabe (b) an die Server-Einheit (2) überträgt,
- die Server-Einheit und/oder die Client-Einheit mindestens einen von dem privaten Schlüssel und dem öffentlichen Schlüssel generiert/generieren, und
- die Server-Einheit das öffentliche Schlüsselzertifikat generiert und es an die Client-Einheit überträgt.

4. Verfahren nach Anspruch 3, wobei:
- die Server-Einheit den öffentlichen Schlüssel (e) aus der biometrischen Angabe b und einem privaten Serverschlüssel (K) generiert,
- die Client-Einheit zwei private Primzahlen (p, q) nach dem Zufallsprinzip generiert und aus den Primzahlen eine öffentliche RSA-Ganzzahl (n) bildet,
- die Client-Einheit die RSA-Ganzzahl (n) an die Server-Einheit überträgt, und
- aus der RSA-Ganzzahl (n) und dem öffentlichen Schlüssel (e) die Client-Einheit einen privaten Schlüssel (d) generiert,
wobei der erhaltene Signaturschlüssel das Paar (privater Schlüssel, öffentlicher Schlüssel) (d, e) ist und das zugeordnete öffentliche Schlüsselzertifikat das Paar (öffentlicher Schlüssel, RSA-Ganzzahl) (e, n) ist.

5. Verfahren nach einem der vorstehenden Ansprüche, wobei die Client-Einheit ferner Geolokalisierungsdaten gewinnt und sie an die Server-Einheit mit der biometrischen Angabe überträgt.

6. Verfahren nach einem der vorstehenden Ansprüche, umfassend ferner vor dem Generieren des Signaturschlüssels und des Zertifikats das Überprüfen der Identität des Individuums durch die Server-Einheit auf der Basis von mindestens einem Teil seiner biometrischen Angabe (b, b₂) und gegebenenfalls zugeordneten Geolokalisierungsdaten.

7. Verfahren nach Anspruch 6, das in einem System durchgeführt wird, das ferner eine Datenbank (DB) umfasst, umfassend eine Vielzahl biometrischer Referenzdaten von Individuen (b_{ref}), wobei das Überprüfen der Identität des Individuums das Vergleichen der biometrischen Angabe des Individuums mit einer oder mehreren biometrischen Referenzangaben umfasst, um das Individuum jeweils zu identifizieren oder zu authentifizieren.

8. Verfahren nach einem der vorstehenden Ansprüche, wobei die biometrische Angabe (b) mindestens zwei Teile (b₁, b₂) umfasst, und wobei:
- der Schritt des Generierens des Signaturschlüssels und/oder des öffentlichen Schlüsselzertifikats auf der Basis eines ersten Teils (bi) der biometrischen Angabe (b) durchgeführt wird, und
- ein zweiter Teil (b₂) der biometrischen Angabe (b) auf einem Datenträger gespeichert ist.

9. Verfahren zum Übertragen einer Nachricht zwischen einer Client-Einheit und einer Zieleinheit (3), umfassend die Durchführung des Verfahrens nach einem der vorstehenden Ansprüche durch eine Server-Einheit (2) und die Client-Einheit (1) zum Generieren eines elektronischen Signaturschlüssels, umfassend einen privaten Schlüssel und einen öffentlichen Schlüssel, und ein zugeordnetes öffentliches Schlüsselzertifikat,
wobei das Verfahren ferner die Schritte umfasst, bei denen:
- die Client-Einheit (1) mindestens eine mit dem privaten Schlüssel zu übertragende Nachricht signiert und die signierte Nachricht und das Zertifikat an die Zieleinheit (3) überträgt,
- die Zieleinheit (3) die Signatur der Nachricht der Server-Einheit kommuniziert, und
- die Server-Einheit (2) den öffentlichen Schlüssel oder das öffentlichen Schlüsselzertifikat entschlüsselt, um mindestens einen Teil einer biometrischen Angabe (b) zu erhalten, die zum Generieren der Signatur gedient hatte.

10. Verfahren zum Übertragen einer Nachricht nach vorstehendem Anspruch, wobei der Signaturschlüssel und das Zertifikat nach der Übertragung von einer oder einer Vielzahl von Nachrichten oder nach einem vorher festgelegten Zeitraum gelöscht werden.

11. Verfahren zum Übertragen einer Nachricht nach Anspruch 9 oder 10, umfassend ferner einen Schritt, bei dem die Server-Einheit (2) die biometrische Angabe (b) an die Zieleinheit (3) zurückschickt, damit diese eine Übereinstimmung zwischen dem Besitzer der Angabe (b) und dem Individuum, das Ursprung der übertragenen Nachricht ist, überprüft.

12. Verfahren zum Übertragen einer Nachricht nach Anspruch 10, umfassend ferner die Schritte, bei denen:
- die Zieleinheit (3) auf dem Individuum eine neue biometrische Angabe (b') gewinnt und die Angabe an die Server-Einheit (2) überträgt, und
- die Server-Einheit (2) die neue biometrische Angabe (b') mit der Angabe (b) des Individuums vergleicht, um eine Übereinstimmung zwischen dem Besitzer der Angabe und dem Individuum, das Ursprung der übertragenen Nachricht ist, festzustellen.

13. Verfahren zum Übertragen einer Nachricht nach einem der Ansprüche 10 bis 12, wobei eine oder mehrere Client-Einheit(en) eine Vielzahl von signierten Nachrichten und entsprechenden Zertifikaten an die Server-Einheit schickt/schicken, wobei die Signatur und das Zertifikat jeder Nachricht aus unterschiedlichen biometrischen Angaben erhalten sind, wobei das Verfahren ferner die Überprüfung durch die Server-Einheit, auf der Basis der Zertifikate, umfasst, dass die biometrischen Angaben demselben Individuum gehören.

14. System zum Generieren eines Signaturschlüssels und eines zugeordneten öffentlichen Schlüsselzertifikats, das für die Durchführung des Verfahrens nach einem der Ansprüche 1 bis 10 geeignet ist, wobei das System eine Client-Einheit (1) und eine Server-Einheit (2) umfasst, die zum Generieren eines Signaturschlüssels, umfassend einen öffentlichen Schlüssel und einen privaten Schlüssel, und/oder ein öffentliches Schlüsselzertifikat, durch Verschlüsseln von mindestens einem Teil einer biometrischen Angabe (b, b₁) mit Hilfe eines privaten Chiffrierschlüssels (K), welcher der Server-Einheit (2) bekannt ist, geeignet sind,
wobei die Client-Einheit (1) ferner zum Gewinnen der biometrische Angaben auf dem Individuum und zum Signieren mindestens einer Nachricht auf der Basis des privaten Schlüssel und des öffentlichen Schlüsselzertifikats geeignet ist, und die Server-Einheit (2) zum Entschlüsseln des öffentlichen Schlüssels und/oder des öffentlichen Schlüsselzertifikats und zum Erhalten des Teils der biometrischen Angabe geeignet ist,
wobei die Client-Einheit (1) und die Server-Einheit (2) zum zeitweiligen Speichern des Teils der biometrischen Angabe (b, b₁) bis zum Generieren des Signaturschlüssels und des öffentlichen Schlüsselzertifikats und zum Entfernen des Teils der biometrischen Angabe nach dem Generieren geeignet sind.

15. System nach Anspruch 14, wobei die Client-Einheit (1) ein Smartphone oder eine Chipkarte ist.

## Claims

1. A method for generating an electronic signature key and an associated public-key certificate, implemented by a client unit (1) and a server unit (2), the method comprising a step during which the client unit and/or the server unit generate(s) a signature key comprising a private key and a public key, and a public key certificate comprising said public key,
the method being **characterized in that** the client unit (1) acquires, on an individual, one biometric data (b), **in that** the public key and the public key certificate are generated by encryption of at least a portion of said biometric data (b, b₁) using a private encryption key (K) known to the server unit (2) so that they can be decoded by the server unit (2) to obtain said biometric data portion,
and **in that** the biometric data portion (b, b₁) from which the key public and the public key certificate have been generated is ephemeral and is not stored after generation of the signature key and of the public key certificate.

2. The method according to claim 1, wherein the generation of the signature key and of the certificate is carried out by implementing a signature key generation algorithm associated with a signature scheme among the following group: RSA, DSA, ECDSA.

3. The method according to any of the preceding claims, wherein:
- the client unit (1) transfers the biometric data (b) to the server unit (2),
- the server unit and/or the client unit generate(s) at least one of the private key and of the public key, and
- the server unit generates the public key certificate and transfers it to the client unit.

4. The method according to claim 3, wherein:
- the server unit generates the public key (e) from the biometric data b and from a server private key (K),
- the client unit generates two private prime numbers (p, q) randomly and, from said prime numbers, forms a public RSA integer (n),
- the client unit transfers the RSA integer (n) to the server unit, and
- from the RSA integer (n) and the public key (e), the client unit generates a private key (d),
the obtained signature key being the pair (private key, public key) (d, e) and the associated public key certificate being the pair (public key, RSA integer) (e, n) .

5. The method according to any of the preceding claims, wherein the client unit further acquires geolocation data and transfers them to the server unit with the biometric data.

6. The method according to any of the preceding claims, further comprising, prior to the generation of the signature key and of the certificate, the verification of the identity of the individual by the server unit from at least a portion of its biometric data (b, b₂) and, when appropriate, from the associated geolocation data.

7. The method according to claim 6, implemented in a system further comprising a database (DB) comprising a plurality of individual reference biometric data (b_{ref}), the verification of the identity of the individual comprising the comparison of the biometric data of the individual with one or more reference biometric data respectively to identify or authenticate the individual.

8. The method according to any of the preceding claims, wherein the biometric data (b) comprises at least two portions (b₁, b₂), and wherein:
- the step of generating the signature key and/or the public key certificate is carried out from a first portion (b₁) of the biometric data (b), and
- a second portion (b₂) of the biometric data (b) is stored in a storage medium.

9. A method for transferring a message between a client unit and a destination unit (3), comprising the implementation of the method according to any of preceding claims by a server unit (2) and the client unit (1) to generate an electronic signature key comprising a private key and a public key, and an associated public key certificate,
the method further comprising the steps during which:
- the client unit (1) signs at least one message to be transferred with the private key and transfers said signed message and the certificate to the destination unit (3),
- the destination unit (3) communicates the signature of the message to the server unit, and
- the server unit (2) decodes the public key or the public key certificate to obtain at least a portion of a biometric data (b) having been used to generate the signature.

10. The method for transferring a message according to the preceding claim, wherein the signature key and the certificate are deleted after the transfer of one or several message(s) or after a predetermined period of time.

11. The method for transferring a message according to claim 9 or 10, further comprising a step during which the server unit (2) returns the biometric data (b) to the destination unit (3) so that the latter verifies a correspondence between the owner of said data (b) and the individual at the source of the transferred message.

12. The method for transferring a message according to claim 10, further comprising the steps during which:
- the destination unit (3) acquires, on the individual, a new biometric data (b') and transfers said data to the server unit (2), and
- the server unit (2) compares the new biometric data (b') with the data (b) of the individual to determine a correspondence between the owner of said data and the individual at the origin of the transferred message.

13. The method for transferring a message according to any of claims 10 to 12, wherein one or several client unit(s) return(s) a plurality of signed messages and corresponding certificates to the server unit, the signature and the certificate of each message being obtained from distinct biometric data, the method further comprising the verification by the server unit, from the certificates, that the biometric data belong to the same individual.

14. A system for generating a signature key and an associated public key certificate, adapted for the implementation of the method according to any of claims 1 to 10, the system comprising a client unit (1) and a server unit (2) adapted to generate a signature key comprising a public key and a private key, and/or a public key certificate, by encryption of at least a portion of the biometric data (b, b₁) using a private encryption key (K) known to the server unit (2),
the client unit (1) being further adapted to acquire the biometric data on an individual, and to sign at least one message from the private key and the public key certificate, and the server unit (2) being adapted to decode the public key and/or the public key certificate and obtain said biometric data portion,
the client unit (1) and the server unit (2) being adapted to temporarily store the biometric data (b, b₁) portion until generation of the signature key and of the public key certificate, and to delete said biometric data portion after said generation.

15. The system according to claim 14, wherein the client unit (1) is a smartphone or a smart card.
